# EUROPEAN PATENT APPLICATION

(11) **EP 4 808 283 A1**
(43) Date of publication of application: **16.09.2026**
(21) Application number: 26164080.9
(22) Date of filing: 11.03.2026
(51) Int. Cl.: H05G 1/32, H05G 1/10, H05G 1/54, H01J 35/00, G01N 23/04

(54) **X-RAY INSPECTION APPARATUS**

(30) Priority: 14.03.2025 JP 2025041631
(71) Applicant: Ishida Co., Ltd., Kyoto 606-8392 (JP)
(72) Inventor: TOMINAGA, Kota, Ritto-shi, Shiga 520-3026 (JP); YURUGI, Futoshi, Ritto-shi, Shiga 520-3026 (JP)
(74) Representative: Global IP Europe Patentanwaltskanzlei

(57) **Abstract**

Providing a safer X-ray inspection apparatus. The X-ray inspection apparatus (10) includes a conveyor (12) to convey a product, an X-ray irradiator (13) to irradiate X-rays generated by an X-ray tube (132a) on the product, a line sensor (14) to detect the X-rays irradiated on the product, a controller (20) to output, to the X-ray irradiator, a first voltage value and a first current value, which respectively are the value of a voltage and the value of a current which are to be inputted to the X-ray tube, so that the output of the X-ray tube is equal to or less than a maximum output, and an electric power controller (134) configured as a component separate from the controller. In a case where the output of the X-ray tube exceeds the maximum output when the current at the current value outputted from the controller is inputted to the X-ray tube, the electric power controller restricts the current inputted to the X-ray tube independently from the controller so that the output of the X-ray tube is equal to or less than the maximum output.

## Description

### TECHNICAL FIELD

The present invention relates to an X-ray inspection apparatus.

### BACKGROUND ART

Conventionally, in X-ray inspection apparatuses, a controller makes an X-ray irradiator to generate X-rays with a set current value and voltage value (for example, see Patent Literature 1 (Japanese Laid-open Patent Publication No. 2007-232586)). When generating the X-ray, the control unit manages a current value and a voltage value of the X-ray irradiator so that X-rays exceeding a prescribed output are not irradiated from the X-ray irradiator.

### SUMMARY OF THE INVENTION

### <Problem to be Solved by Invention>

When the output of X-rays irradiated from an X-ray irradiator exceeds a prescribed output, there is a possibility that the X-rays will leak out from an X-ray-shielding body that covers an inspection region in which the X-rays are irradiated. Although safety is managed by a control unit, as the X-rays cannot be directly perceived by humans even when the X-rays leak from the X-ray-shielding body, an even higher level of safety is desired in X-ray inspection apparatuses.

### <Means for Solving Problem>

An X-ray inspection apparatus according to a first aspect of the present invention comprises a conveying unit, an X-ray irradiator, an X-ray detector, a first control unit, and a second control unit. The conveying unit is configured to convey an object to be inspected. The X-ray irradiator is configured to cause an X-ray tube to generate X-rays and irradiate the generated X-rays on the object being inspected that is being conveyed by the conveying unit. The X-ray detector is configured to detect the X-rays irradiated on the object being inspected. The first control unit is configured to inspect whether the object being inspected is defective based on a detection value detected by the X-ray detector. The first control unit is configured to output, to the X-ray irradiator, a first voltage value and a first current value, which respectively are the a value of a voltage and a value of a current which are to be inputted to the X-ray tube, so that the output of the X-ray tube is equal to or less than a first output. The second control unit is configured as a component separate from the first control unit. The second control unit is configured to restrict the voltage or the current inputted to the X-ray tube independently of the first control unit. The second control unit is configured to restrict, in a case where the output of the X-ray tube exceeds the first output when the voltage at the voltage value and the current at the current value outputted from the first control unit are inputted to the X-ray tube, the voltage or the current inputted to the X-ray tube so that the output of the X-ray tube is equal to or less than the first output.

Basically, the first control unit instructs the voltage value and the current value to the X-ray irradiator so that the output of the X-ray tube does not exceed the first output. However, in a case where an error occurs in the instruction made by the first control unit to the X-ray irradiator due to an adverse event, the output of the X-ray tube might exceed the first output (if second control unit is not present).

By contrast, in the X-ray inspection apparatus of the invention according to the first aspect, not only does the first control unit control the output of the X-ray tube, the second control unit, which is a component separate from the first control unit, also restricts the output of the X-rays so that the output of the X-ray tube does not exceed the first output. Therefore, this X-ray inspection apparatus makes it possible to achieve a higher level of safety.

An X-ray inspection apparatus according to a second aspect of the present invention is the X-ray inspection apparatus according to the first aspect, wherein the first control unit is a computer that has a processor and a memory. The processor is configured to execute a program stored in the memory and thereby output the first voltage value and the first current value to the X-ray irradiator. The second control unit has an electronic circuit configured to restrict voltage or current, the electronic circuit being configured to restrict the voltage or current inputted to the X-ray tube.

In the X-ray inspection apparatus according to the second aspect, the electronic circuit, which is in the form of hardware (affording greater reliability by not depending on software), controls the output of the X-rays from the X-ray irradiator, in addition to the computer (first control unit) to control the output of the X-ray irradiator by using software. Therefore, in the X-ray inspection apparatus according to the second aspect, it is easy to reliably prevent excessive output of X-rays from the X-ray irradiator.

An X-ray inspection apparatus according to a third aspect of the present invention is the X-ray inspection apparatus according to the second aspect, wherein the electronic circuit includes a division circuit configured to output a value obtained by dividing the first output by the first voltage value or the first current value.

An X-ray inspection apparatus according to a fourth aspect of the present invention is the X-ray inspection apparatus according to the second or third aspect, wherein the electronic circuit is configured to restrict the current inputted to the X-ray tube to a second current value obtained by dividing the first output by the first voltage value in a case where the first current value is greater than the second current value.

An X-ray inspection apparatus according to a fifth aspect of the present invention is the X-ray inspection apparatus according to the second or third aspect, wherein the electronic circuit is configured to restrict the voltage inputted to the X-ray tube to a second voltage value obtained by dividing the first output by the first current value in a case where the first voltage value is greater than the second voltage value.

In the X-ray inspection apparatus according to the fourth and fifth aspects, it is possible to suppress the occurrence of instances in which the output of the X-ray tube exceeds the first output, even in a case where an error occurs in the instruction made by the first control unit to the X-ray irradiator due to an adverse event.

An X-ray inspection apparatus according to a sixth aspect of the present invention is the X-ray inspection apparatus according to any of the first to fifth aspects, further comprises an input unit configured to receive input of the first voltage value. The first control unit is configured to output the first voltage value received by the input unit to the X-ray irradiator.

In the X-ray inspection apparatus according to a sixth aspect, it is possible to control the voltage inputted to the X-ray tube to an appropriate voltage value in accordance with the type of object being inspected.

An X-ray inspection apparatus according to a seventh aspect of the present invention is the X-ray inspection apparatus according to the sixth aspect, wherein the input unit is configured to further receive input of the first current value with which a product of the first voltage value and the first current value is equal to or less than the first output. The first control unit is configured to output the first current value received by the input unit to the X-ray irradiator.

In the X-ray inspection apparatus according to the seventh aspect, it is possible to make the output of the X-ray tube lower than the first output (i.e., a set maximum output), and thereby extend the service life of the X-ray tube.

An X-ray inspection apparatus according to an eighth aspect of the present invention is the X-ray inspection apparatus according to the second aspect, wherein the first control unit is configured to acquire, from the X-ray irradiator, information pertaining to the maximum output of the X-ray tube that is set for the X-ray irradiator, and determine whether the maximum output of the X-ray tube and the first output stored in the memory match each other.

In the X-ray inspection apparatus according to the eighth aspect, it is possible to suppress the occurrence of adverse events in which the output of the X-ray tube deviates from an appropriate value as a result of a mismatch between the maximum output of the X-ray tube that is set for the X-ray irradiator and the first output that is set by the first control unit (i.e., the value of the output that is recognized by the first control unit as the maximum output that can be outputted by the X-ray irradiator).

### <Effects of Invention>

In the X-ray inspection apparatus according to the present invention, not only does the first control unit control the output of the X-ray tube, the second control unit, which is a component separate from the first control unit, also restricts the output of the X-rays so that the output of the X-ray tube does not exceed the first output. Thus, it is possible to achieve a higher level of safety.

### BRIEF DESCRIPTION OF THE DRAWINGS

[Fig. 1] An exterior perspective view of an X-ray inspection apparatus according to one embodiment of the present invention;
[Fig. 2] A simplified configuration diagram of the interior of a housing of the X-ray inspection apparatus in Fig. 1;
[Fig. 3] A block diagram of the X-ray inspection apparatus in Fig. 1;
[Fig. 4] A diagram illustrating the flow of a control performed on the output of an X-ray tube in the X-ray inspection apparatus in Fig. 1; and
[Fig. 5] A block diagram of an X-ray inspection apparatus according to modification A.

### DESCRIPTION OF EMBODIMENTS

An X-ray inspection apparatus according to one embodiment of the present invention is described below with reference to the accompanying drawings. The embodiment described below is a specific example of the present invention but does not in any way limit the technical scope of the present invention.

### (1) Overall summary

An X-ray inspection apparatus 10 detects X-rays irradiated on a product P (transmitted through the product P) and inspects whether the product P is defective on the basis of a detected detection value. Specifically, the X-ray inspection apparatus 10 inspects whether the product P is defective on the basis of an X-ray transmission image obtained by irradiating X-rays on the product P. The details of the inspection are not limited, but for example, the X-ray inspection apparatus 10 performs an extraneous-matter inspection to determine whether the product P is defective according to whether extraneous matter is present in the product P.

The X-ray inspection apparatus 10 is incorporated into, e.g., a foodstuff production line. For example, the product (foodstuff) P to be inspected is conveyed to the X-ray inspection apparatus 10 from an upstream process. The X-ray inspection apparatus 10 inspects the product P being conveyed and classifies the product P as either non-defective or defective. The result of the inspection performed by the X-ray inspection apparatus 10 is transmitted to a sorting mechanism (not shown) that is disposed downstream of the X-ray inspection apparatus 10. The sorting mechanism sends products P that are classified as non-defective to a subsequent process (e.g., a packaging process), and sorts products P that are classified as defective to, e.g., a defective product collection container.

### (2) Detailed description

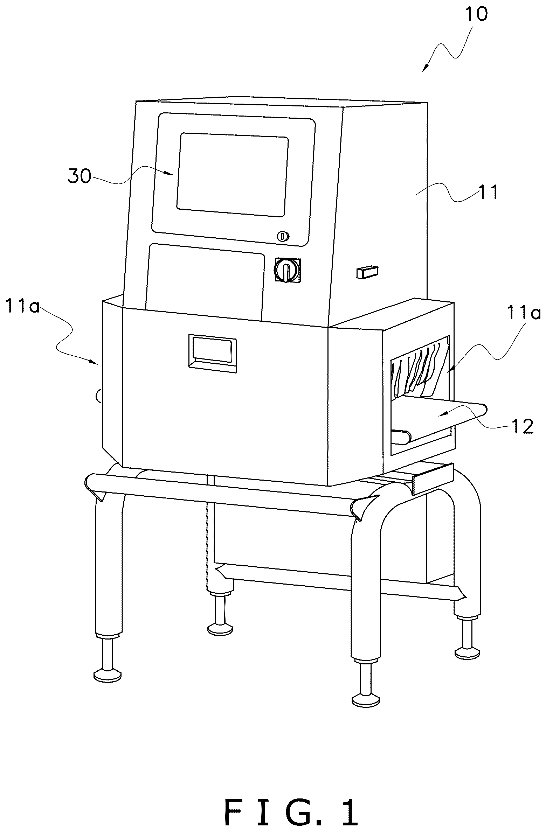

As illustrated in Fig. 1 to 3, the X-ray inspection apparatus 10 mainly has a housing 11, a conveyor 12, an X-ray irradiator 13, a line sensor 14, a display 30, and a controller 20.

### (2-1) Housing

The housing 11 (shield box) accommodates the conveyor 12, the X-ray irradiator 13, the line sensor 14, and the controller 20, and shields against the leakage of X-rays to the outside. The display 30, various switches (not shown), and the like are disposed on the upper section of the front surface of the housing 11.

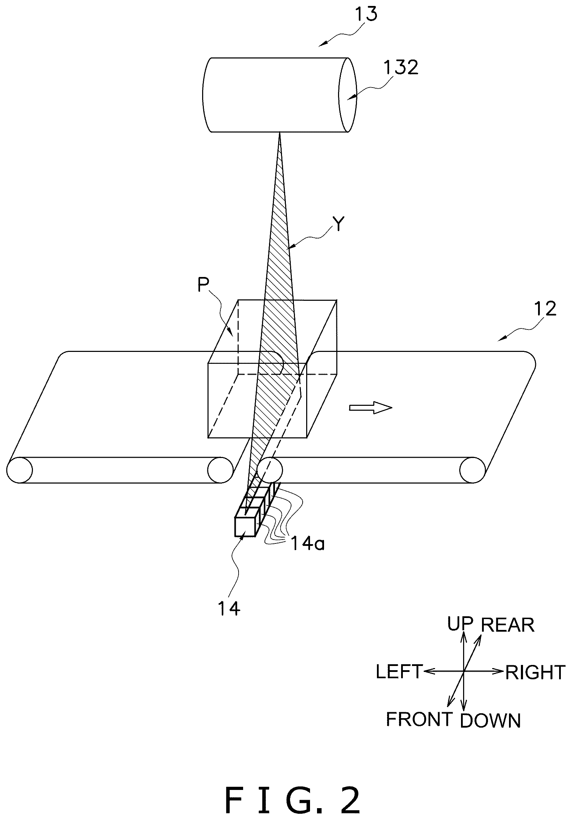

Openings 11a for enabling the product P to be transported in and out (see Fig. 1) are formed in side surfaces of the housing 11 that are upstream and downstream in a conveying direction D of the conveyor 12 (see Fig. 2).

### (2-2) Conveyor

The conveyor 12 is one example of a conveying unit to convey the products P which are objects to be conveyed. The conveyor 12 is disposed so as to pass through both openings 11a of the housing 11.

### (2-3) X-ray irradiator

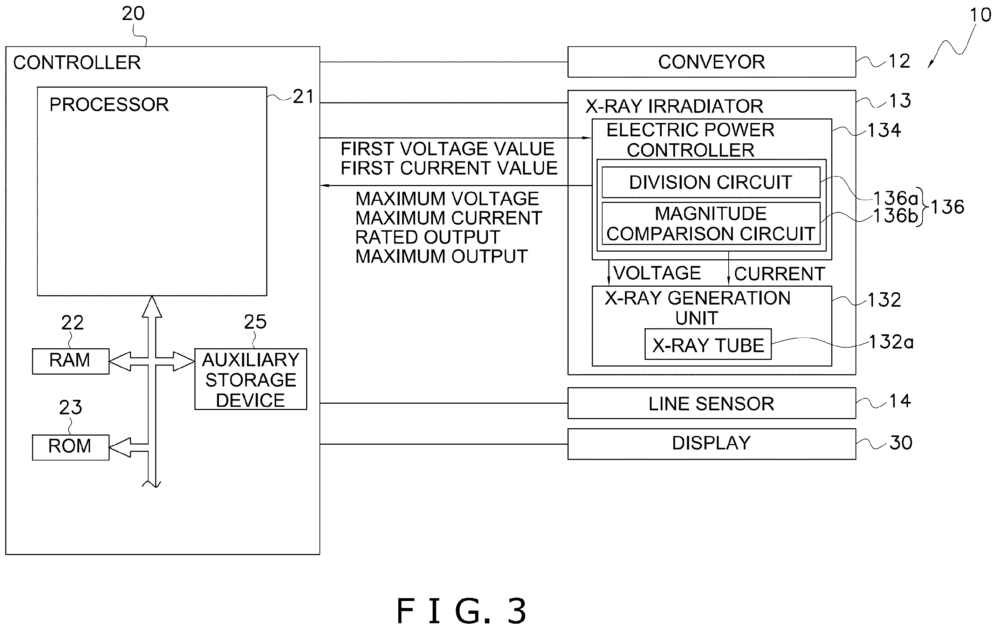

The X-ray irradiator 13 includes an X-ray generation unit 132 that includes an X-ray tube 132a, and an electric power controller 134 (see Fig. 3).

The X-ray irradiator 13 causes the X-ray tube 132a of the X-ray generation unit 132 to generate X-ray and irradiates the generated X-rays on the products P being conveyed by the conveyor 12. The X-ray generation unit 132 (X-ray tube 132a) is disposed above the conveyor 12, as shown in Fig. 2. The X-ray generation unit 132 irradiates the X-rays in a fan-shaped irradiation range Y toward the line sensor 14, which is disposed below the conveyor 12. The irradiation range Y of the X-ray irradiator 13 extends perpendicular to a conveying surface of the conveyor 12 and spreads in a direction orthogonal to the conveying direction D of the conveyor 12 (i.e., in a width direction of a belt of the conveyor 12), as shown in Fig. 2.

The electric power controller 134 is one example of a second control unit. The electric power controller 134 is a device separate from the controller 20, which is one example of a first control unit, and is configured as a component separate therefrom. The electric power controller 134 restricts a voltage or current inputted to the X-ray tube 132a independently of the controller 20. The electric power controller 134 controls the voltage (tube voltage) and the current (tube current) inputted to the X-ray tube 132a.

A rated output, a maximum voltage, and a maximum current are established as specifications of the X-ray tube 132a. Additionally, the maximum output of the X-ray tube 132a (i.e., first output in the claims) is set in the X-ray irradiator 13. The maximum output is a value that is set by a user and is equal to or less than the rated output. Setting the maximum output of the X-ray tube 132a to a small value reduces the penetration power of X-ray and the X-ray amount (electron beam amount), but have an advantage in making it possible to extend the service life of the X-ray tube 132a. Additionally, if the output of the X-ray tube 132a is small, it will be permissible for the shielding capability of the housing 11 against X-rays to be comparatively low, therefore leading to a decrease in cost of the X-ray transmission apparatus.

The electric power controller 134 controls the X-ray generation unit 132 (specifically, a high-voltage power supply (not shown) of the X-ray generation unit 132) so that the voltage inputted to the X-ray tube 132a does not exceed the maximum voltage. The electric power controller 134 also controls the X-ray generation unit 132 (specifically, controls the current inputted to a filament of the X-ray generation unit 132 to generate thermions) so that the current inputted to the X-ray tube 132a does not exceed the maximum current. Moreover, the electric power controller 134 performs control (restricts electric power) so that the electric power inputted to the X-ray tube 132a (i.e., the product of the voltage and the current) does not exceed a maximum electric power. Restricting the electric power may be necessary because there are cases where the electric power exceeds the maximum electric power even when the voltage is no greater than the maximum voltage and the current is no greater than the maximum current.

The electric power controller 134 preferably transmits information pertaining to the maximum voltage, maximum current, rated output, and maximum output of the X-ray tube 132a (referred to below as X-ray tube information) to the controller 20 (which shall be described later). The electric power controller 134 transmits the X-ray tube information to the controller 20 at least in a period from after startup of the X-ray inspection apparatus 10 to when the X-ray irradiator 13 begins irradiating the X-rays. Alternatively, the electric power controller 134 may transmit the X-ray tube information to the controller 20 constantly while electric power is being supplied to the X-ray inspection apparatus 10.

A description such as a configuration for suppressing the electric power inputted to the X-ray tube 132a to no greater than the maximum electric power, which is achieved by the electric power controller 134, shall be provided later.

### (2-4) Line sensor

The line sensor 14 is one example of an X-ray detector in the claims.

The line sensor 14 is disposed below a path along which the product P is conveyed by the conveyor 12 (see Fig. 2). The line sensor 14 detects the X-rays irradiated on the product P.

The line sensor 14 mainly has a large number of X-ray detection elements 14a (see Fig. 2). The X-ray detection elements 14a are arranged so as to be lined up in the width direction of the conveyor 12 orthogonal to the conveying direction of the conveyor 12. The X-ray detection elements 14a detects the X-rays (transmitted X-rays) that are transmitted through the product P being conveyed by the conveyor 12. The X-ray detection elements 14a of the line sensor 14 output X-ray transmission signals indicating a voltage corresponding to the intensity of the detected transmitted X-rays (i.e., the X-ray transmission amount).

The controller 20 (which shall be described later) receives the X-ray transmission signals outputted by the line sensor 14 and generates an X-ray image (X-ray transmission image) on the basis of the X-ray transmission signals. In the X-ray image generated by the controller 20, locations where the X-ray transmission amount is high are displayed brighter (fainter), and locations where the X-ray transmission amount is low are displayed darker (more concentrated).

In a case where the X-ray inspection apparatus 10 performs the extraneous-matter inspection for the product P including the extraneous-matter, the X-ray transmission amount will be less at positions corresponding to extraneous matter (e.g., in cases where the density of the extraneous matter is high) than in the surroundings of said positions, and said positions will be displayed darker in the X-ray image. The controller 20 uses such a difference in luminance displayed in the X-ray image to determine whether extraneous matter is present in the product P.

### (2-5) Display

The display 30 has a touch panel function. The display 30 is electrically connected to the controller 20 and transfers signals to and from the controller 20.

The display 30 functions as a display unit and an input unit. For example, the display 30 displays a transmission image, a result of the extraneous-matter inspection, or the like. The display 30 also receives input of various settings and various items of information inputted by an operator.

The display 30, serving as the input unit, receives input of, e.g., the value of a voltage (first voltage value) and the value of a current (first current value) which are to be inputted to the X-ray tube 132a. Ordinarily, when the first voltage value becomes higher, X-ray transmission power becomes higher and X-ray can more easily pass through the product P. Ordinarily, when the first current value becomes higher, X-ray amount (electron beam amount) increases, the X-ray image becomes brighter, and the image quality of the X-ray image is improved. The first voltage value and the first current value are both important in the X-ray inspection, but the first voltage value is particularly important because the X-ray transmissivity varies according to the product P and it may become difficult to carry out an appropriate inspection of the product P depending on the value of the X-ray transmission power. The operator using the X-ray inspection apparatus 10 inputs an appropriate first voltage value and first current value in accordance with the type of product P. The first voltage value and the first current value are set such that the product thereof is equal to or less than the maximum output of the X-ray tube 132a. From the standpoint of the image quality of the X-ray image, it is generally preferable that the product of the first voltage value and the first current value be set so as to be equal to the maximum output of the X-ray tube 132a (in other words, higher output is preferable). The controller 20 (which shall be described later) outputs, to the electric power controller 134 of the X-ray irradiator 13, the first voltage value and the first current value that are inputted to the display 30.

In the foregoing, a case where both the first voltage value and the first current value are inputted to the display 30 has been described as an example. However, inputting of the first current value need not be performed. In such instances, the controller 20 (which shall be described later) may use, as the first current value, a value obtained by dividing a prescribed output (e.g., the maximum output of the X-ray tube 132a) by the first voltage value.

Additionally, in the foregoing, a case where the display 30 is used as an input unit has been described as an example. However, an input device other than the display 30 having the touch panel function may be provided to the X-ray inspection apparatus 10 and the first voltage value and the others may be inputted to this input device.

### (2-6) Controller

The controller 20 is one example of a first control unit. The controller 20 generates an X-ray image on the basis of the X-ray amount transmitted through the product P detected by the line sensor 14. The controller 20 inspects whether the product P is defective or not on the basis of the generated X-ray image (i.e., on the basis of the detection value detected by the line sensor 14).

The controller 20 is a computer having a processor 21 (CPU, MPU, GPU, etc.), RAM 22, ROM 23, auxiliary storage device 25 (HDD, SDD, etc.), display control circuit to control display of data by the display 30, key input circuit to receive key input data that is inputted by an operator via the display 30, communication port to enable connection to an external apparatus or to a LAN or other network, and the like, as shown in Fig. 3. The processor 21, RAM 22, ROM 23, auxiliary storage device 25, and the like are connected to each other via a bus line of an address bus, a data bus, or the like.

The controller 20 is electrically connected to the conveyor 12, the X-ray irradiator 13, the line sensor 14, and the display 30, and controls the operations of these devices. The ROM 23 and the auxiliary storage device 25 (hereinafter, the ROM 23 and the auxiliary storage device 25 are collectively referred to as a memory) store, *inter alia,* various programs executed by the processor 21, various items of information such as parameters and settings used for inspection (here, extraneous-matter inspection), and inspection results. The parameters used for inspection stored in the memory are parameters necessary for assessing whether extraneous matter is present in the products P, and include, for example, threshold values of the transmitted X-ray amount to distinguish between extraneous matter and the products P. The settings used for inspection stored in the memory include, for example, information on the inspection speed of the products P. The settings used for inspection that are stored in the memory also include the information pertaining to the maximum voltage, maximum current, rated output, and maximum output of the X-ray tube 132a. Some or all of these items of information may be stored in the memory in advance, may be inputted from the input unit of the display 30 or the like, or may be received from an external unit (e.g., a computer for managing the X-ray inspection apparatus 10). The settings used for inspection stored in the memory also include the first voltage value and the first current value which are to be inputted to the display 30.

The processor 21 of the controller 20 executes a program stored in the memory, thereby controlling the voltage and current which are to be inputted to the X-ray tube 132a of the X-ray irradiator 13 and the output of the X-ray irradiator 13. A description shall be provided later regarding the control of the voltage and current which are to be inputted to the X-ray tube 132a and the output of he X-ray tube 132a, performed by the controller 20.

The processor 21 executes a program stored in the memory to inspect the product P. The processor 21 determines that extraneous matter is present in the product P when, e.g., a location darker than a criterion level is present in the X-ray image generated on the basis of the X-ray amount transmitted through the product P detected by the line sensor 14. In cases where it is determined that extraneous matter is present in the product P, the processor 21, e.g., displays an indication that a defective product is present on the display 30 and sends, to the sorting device disposed downstream of the X-ray inspection apparatus 10, a sorting instruction so as to remove the defective product from a manufacturing line.

### (3) Control of X-ray tube

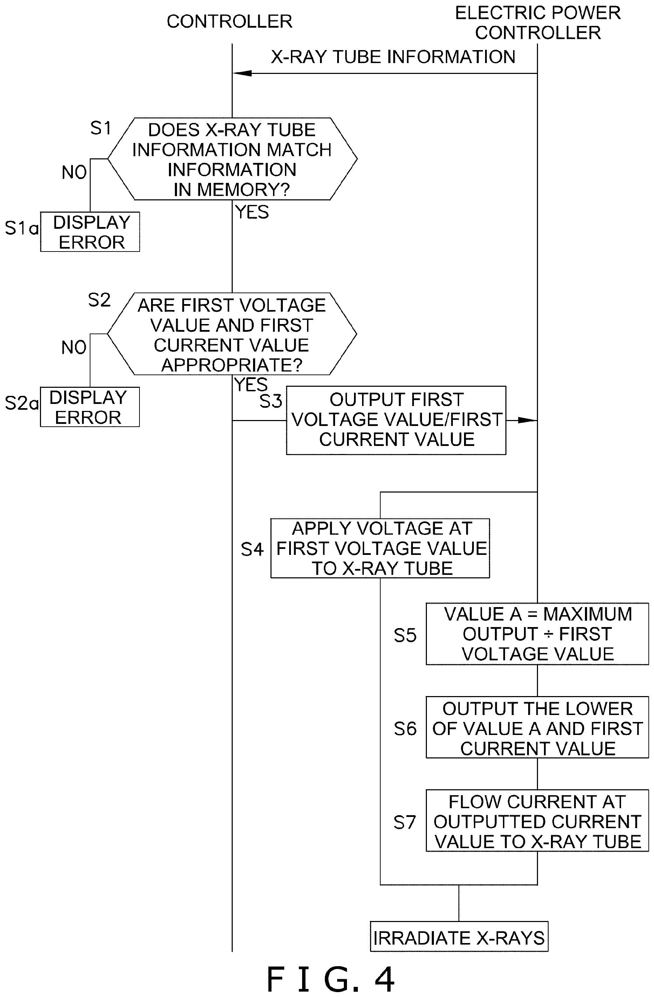

The control of the voltage and current which are to be inputted to the X-ray tube 132a and the output of the X-ray tube 132a performed by the controller 20 and the electric power controller 134 are explained with reference to Fig. 4.

The processor 21 of the controller 20 may, when controlling the X-ray tube 132a, firstly determine whether there are any errors in the maximum voltage, maximum current, rated output, and maximum output of the X-ray tube 132a that are stored in the memory (step S1). Specifically, the processor 21 may determine whether the maximum voltage, maximum current, rated output, and maximum output of the X-ray tube 132a that are stored in the memory and the aforementioned X-ray tube information transmitted from the electric power controller 134 match each other.

For example, the controller 20 performs the process of step S1 and determines whether the maximum output of the X-ray tube 132a set for the X-ray irradiator 13 and the maximum output stored in the memory (i.e., first output in the claims) match each other, to suppress the incidence of adverse events in which the output of X-rays from the X-ray tube 132a deviates from an appropriate range as a result of a mismatch between the value of the maximum output recognized by the controller 20 as being outputtable by the X-ray irradiator 13 and the maximum output of the X-ray tube 132a that is actually set for the X-ray irradiator 13.

In cases where the maximum voltage, maximum current, rated output, or maximum output of the X-ray tube 132a that is stored in the memory and the X-ray tube information transmitted from the electric power controller 134 do not match each other, the processor 21 displays the error on the display 30 and prompts the operator to set the correct maximum voltage, maximum current, rated output, and maximum output of the X-ray tube 132a (step S1a).

After step S1 is executed, the controller 20 determines whether the first voltage value and the first current value inputted from the display 30 are appropriate. Specifically, the controller 20 determines whether three conditions are satisfied, specifically (1) whether the first voltage value is equal to or less than the maximum voltage, (2) whether the first current value is equal to or less than the maximum current, and (3) whether the product of the first voltage value and the first current value is equal to or less than the maximum output (step S2). From the standpoint of the image quality of the X-ray image, it is preferable that the product of the first voltage value and the first current value be equal to the maximum output, as described previously.

In cases where any one of the three conditions is not satisfied, the processor 21 of the controller 20 displays the error on the display 30 and prompts the operator to set the correct first voltage value and first current value (step S2a). Due to such a configuration, the X-ray inspection apparatus 10, through use of software, suppresses the incidence of adverse events in which the voltage, current, or output of the X-ray tube 132a exceeds the maximum voltage, maximum current, or maximum output, respectively.

In cases where all of the three conditions are satisfied, the processor 21 of the controller 20 outputs the first voltage value and the first current value to the electric power controller 134 (step S3).

In cases where only the first voltage value is inputted to the display 30, the controller 20 may use, as the first current value, a value obtained by dividing a prescribed output (e.g., the maximum output) by the first voltage value, the prescribed output being equal to or less than the maximum output. In such cases, the controller 20 may determine only whether one condition is satisfied, specifically (1) whether the first voltage value is equal to or less than the maximum voltage. In cases where this condition is not satisfied, the controller 20 displays the error on the display 30 in step S2a. In cases where the condition is satisfied, the controller 20 outputs the first voltage value inputted to the display 30 and the calculated first current value to the electric power controller 134 in step S3.

In the present embodiment, the electric power controller 134 controls the high-voltage power supply of the X-ray generation unit 132 to supply the first voltage value inputted from the controller 20 to the X-ray tube 132a (step S4).

However, as indicated in steps S5 to S7, the electric power controller 134 does not directly flow a current at the first current value inputted from the controller 20 to the filament of the X-ray generation unit 132 without some kind of determination being made, but rather controls (restricts) the current inputted to the X-ray tube 132a by using an electronic circuit 136 having a function to restrict the current inputted to the X-ray tube 132a as necessary. Specifically, in cases where the output of the X-ray tube 132a exceeds the maximum output when the current at the current value outputted from the controller 20 (i.e., the first current value outputted from controller 20) is inputted to the X-ray tube 132a, the electronic circuit 136 of the electric power controller 134 restricts the current inputted to the X-ray tube 132a in order to set the output of the X-ray tube 132a to equal to or less than the maximum output. The electronic circuit 136 may be an analog circuit or a digital circuit.

The reason for which the electric power controller 134 performs steps S5 to S7 is described below.

In step S2 described above, the controller 20 performs control through use of software so that the output of the X-ray tube 132a does not exceed the maximum output. Therefore, if the voltage value and the current value outputted by the controller 20 (i.e., the first voltage value and the first current value) are used, the output of the X-ray tube 132a will, in essence, not exceed the maximum output. However, because the X-rays cannot be directly perceived by humans even when the X-rays leak from the housing 11, it is desirable to achieve an even higher level of safety in the X-ray inspection apparatus 10. Thus, safety measures to prevent the output of the X-ray tube 132a from exceeding the maximum output, even if a particular adverse event occurs (i.e., even in cases such as when the output of the X-ray tube 132a will exceed the maximum output if the voltage value and the current value outputted by the controller 20 are used), are desired.

Accordingly, in the present embodiment, safety measures (processes in steps S5 to S7) that prevent the output of the X-ray tube 132a from exceeding the maximum output are performed by hardware (using the electronic circuit 136), which is more reliable than software.

The electronic circuit 136 includes a division circuit 136a and a magnitude comparison circuit 136b. Processes executed by the electronic circuit 136 are described below while explaining the functions of the division circuit 136a and the magnitude comparison circuit 136b.

When the first voltage value outputted from the controller 20 is inputted, the division circuit 136a outputs a value obtained by dividing the value of the maximum output set in the electric power controller 134 by the first voltage value (i.e., the second currrent value in the claims; referred to below as value A) (step S5).

The magnitude comparison circuit 136b compares the value A outputted by the division circuit 136a and the first current value inputted from the controller 20. The magnitude comparison circuit 136b outputs the first current value in cases where the value A is equal to or greater than the first current value, and outputs the value A in cases where the value A is less than the first current value (step S6). In cases where the value outputted by the magnitude comparison circuit 136b is the value A (i.e., cases where the value A is less than the first current value), the electric power controller 134 may transmit a signal reporting that the value A is less than the first current value to the controller 20, and the controller 20 may display, on the display 30, an indication that circumstances in which the value A is less than the first current value have occurred.

The electric power controller 134 flows current at the value outputted by the magnitude comparison circuit 136b to the filament of the X-ray tube 132a (step S7).

As a result of steps S4 and S7, the X-rays are irradiated from the X-ray tube 132a of the X-ray generation unit 132.

In cases where the first voltage value and the first current value outputted by the controller 20 are set such that the product thereof is equal to the maximum electric power, in an ordinary scenario (i.e., a case where no adverse event of any kind occurs), the value A is equal to the first current value, and the first current value is outputted in step S6. Additionally, in cases where the first voltage value and the first current value outputted by the controller 20 are set such that the product thereof is less than the maximum electric power, in an ordinary scenario (i.e., a case where no adverse event of any kind occurs), the value A is greater than the first current value, and the first current value is outputted in step S6.

However, due to adverse event, it can be assumed that there will be instances in which the product of the voltage value and the current value outputted by the controller 20 exceeds the maximum electric power. Even in such cases, the value A will be outputted in step S6 rather than the first current value, therefore electric power controller 134 can restrict the output of the X-ray tube 132a to equal to or less than the maximum electric power.

### (4) Features

(4-1)
The X-ray inspection apparatus 10 has the conveyor 12, the X-ray irradiator 13, the line sensor 14, the controller 20, and the electric power controller 134. The conveyor 12 conveys the product P. The X-ray irradiator 13 causes the X-ray tube 132a to generate X-rays and irradiate the generated X-rays on the product P being conveyed by the conveyor 12. The line sensor 14 detects the X-rays irradiated on the product P. The controller 20 inspects whether the product P is defective based on the detection value detected by the line sensor 14. The controller 20 outputs, to the X-ray irradiator 13, the first voltage value and the first current value, which respectively are the value of the voltage and the value of the current which are to be inputted to the X-ray tube 132a, so that the output of the X-ray tube 132a is equal to or less than the maximum output. The electric power controller 134 is configured as a component separate from the controller 20. The electric power controller 134 restricts the current inputted to the X-ray tube 132a independently of the controller 20. The electric power controller 134 restricts, in a case where the output of the X-ray tube 132a exceeds the maximum output when the current at the current value outputted from the controller 20 is inputted to the X-ray tube 132a, the current inputted to the X-ray tube 132a so that the output of the X-ray tube 132a is equal to or less than the maximum output.

Basically, the controller 20 instructs the voltage value and the current value to the X-ray irradiator 13 so that the output of the X-ray tube 132a does not exceed the maximum output. However, in a case where an error occurs in the instruction made by the controller 20 to the X-ray irradiator 13 due to an adverse event, the output of the X-ray tube 132a might exceed the maximum output (if the electric power controller 134 is not present).

By contrast, in the X-ray inspection apparatus 10, not only does the controller 20 control the output of the X-ray tube 132a, the electric power controller 134, which is a component separate from the controller 20, also restricts the output of the X-rays so that the output of the X-ray tube 132a does not exceed the maximum output. Therefore, this X-ray inspection apparatus 10 makes it possible to achieve a higher level of safety.

(4-2)
In the X-ray inspection apparatus 10, the controller 20 is a computer that has the processor 21 and the memory (ROM 23 and auxiliary storage device 25). The processor 21 executes a program stored in the memory and thereby outputs the first voltage value and the first current value to the X-ray irradiator 13. The electric power controller 134 has the electronic circuit 136 to restrict the current. The electronic circuit 136 restricts the current inputted to the X-ray tube 132a.

In the X-ray inspection apparatus 10, the electronic circuit 136, which is in the form of hardware (affording greater reliability by not depending on software), controls the output of the X-rays from the X-ray irradiator 13, in addition to the computer (controller 20) to control the output of the X-ray irradiator 13 by using software. Therefore, it is easy to reliably prevent excessive output of X-rays from the X-ray irradiator 13.

(4-3)
In the X-ray inspection apparatus 10, the electronic circuit 136 may include the division circuit 136a to output a value obtained by dividing the maximum output by the first voltage value.

Additionally, in the X-ray inspection apparatus 10, the electronic circuit 136 restricts the current inputted to the X-ray tube 132a to the value A (second current value) obtained by dividing the maximum output by the first voltage value in a case where the first current value transmitted from the controller 20 is greater than the value A.

In the X-ray inspection apparatus 10, it is possible to suppress the occurance of instances in which the output of the X-ray tube 132a exceeds the maximum output, even in a case where an error occurs in the instruction made by the controller 20 to the X-ray irradiator 13 due to an adverse event.

The electronic circuit 136 may have a circuit configuration other than that of the embodiment described above, when the electronic circuit 136 can exhibit the same functions as those described above.

(4-4)
The X-ray inspection apparatus 10 has the display 30 that serves as the input unit to receive input of the first voltage value. The controller 20 outputs the first voltage value received by the display 30 to the X-ray irradiator 13.

In the X-ray inspection apparatus 10, it is possible to control the voltage inputted to the X-ray tube 132a to an appropriate voltage value in accordance with the type of product P.

(4-5)
In the X-ray inspection apparatus 10, the display 30 that serves as the input unit may receive input of the first current value with which the product of the first voltage value and the first current value is equal to or less than the maximum output. The controller 20 outputs the first current value received by the display 30 to the X-ray irradiator 13.

In the X-ray inspection apparatus 10, it is possible to make the output of the X-ray tube 132a lower than the maximum output (i.e., a set maximum output), and thereby extend the service life of the X-ray tube 132a in a case where the output of the X-ray tube 132a need not be at the maximum output.

(4-6)
In the X-ray inspection apparatus 10, the controller 20 acquires, from the X-ray irradiator 13, information pertaining to the maximum output of the X-ray tube 132a that is set for the X-ray irradiator 13, and determines whether the maximum output of the X-ray tube 132a and the maximum output stored in the memory match each other.

In the X-ray inspection apparatus 10, it is possible to suppress the occurance of adverse events in which the output of the X-ray tube 132a deviates from an appropriate value as a result of a mismatch between the maximum output of the X-ray tube 132a that is set for the X-ray irradiator 13 and the maximum output that is set by the controller 20 (i.e., the value of the output that is recognized by the controller 20 as the maximum output that can be outputted by the X-ray irradiator 13).

### (5) Modifications

Modifications of the embodiment above are described below. The modifications below may be combined with other modifications, provided that the modifications do not contradict each other.

### (5-1) Modification A

In the embodiment described above, in cases where the output of the X-ray tube 132a exceeds the maximum output when the current at the current value outputted from the controller 20 is inputted to the X-ray tube 132a, the electric power controller 134 restricts the current inputted to the X-ray tube 132a so that the output of the X-ray tube 132a is equal to or less than the maximum output.

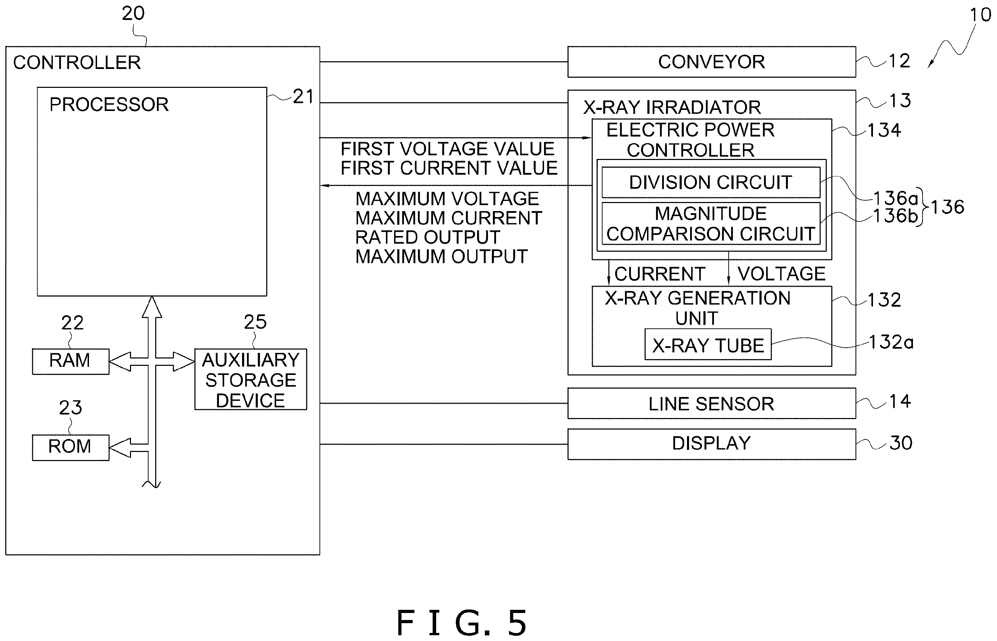

However, the present invention is not limited to this arrangement, and may instead be configured such that, in cases where the output of the X-ray tube 132a exceeds the maximum output when the voltage at the voltage value outputted from the controller 20 is inputted to the X-ray tube 132a, the electric power controller 134 restricts the voltage inputted to the X-ray tube 132a so that the output of the X-ray tube 132a is equa to or less than the maximum output, as indicated in Fig. 5.

As a configuration for achieving the foregoing, the electric power controller 134 has, e.g., an electronic circuit 136 to restrict the voltage. The electronic circuit 136 restricts the voltage inputted to the X-ray tube 132a.

For example, the electronic circuit 136 includes a division circuit 136a to divide the first output by the first current value. The electronic circuit 136 also includes a magnitude comparison circuit 136b to compare the value A outputted by the division circuit 136a and the first voltage value inputted from the controller 20. The magnitude comparison circuit 136b outputs the first voltage value in cases where the value A is equal to or greater than the first voltage value, and outputs the value A in cases where the value A is less than the first voltage value. The electronic circuit 136 restricts the voltage inputted to the X-ray tube 132a to the value A (second voltage value) obtained by dividing the maximum output by the first current in cases where the first voltage value is greater than the value A, and allows the voltage inputted to the X-ray tube 132a to remain at the first voltage value in cases where the first voltage value is equal to or less than the value A.

Even when the present invention is configured in this manner, the same effects as those in the embodiment described above are obtained.

### (5-2) Modification B

In the embodiment described above and modification A, the electric power controller 134 restricts the voltage or current inputted to the X-ray tube 132a by using the electronic circuit 136 (i.e., without depending on software-based control) so that the output of the X-ray tube 132a is equal to or less than the maximum output.

However, the electric power controller 134 may use as well a computer using software to restrict the voltage or current inputted to the X-ray tube 132a and manage the output of the X-ray tube 132a so that it becomes equal to or less than the maximum output. Even with this configuration, safety is improved because the controller 20 and the electric power controller 134, as a dual approach, manage the output of the X-ray tube 132a so that it becomes equal to or less than the maximum output.

However, using a combination of software and more-reliable hardware, as in the embodiment described above and modification A, makes it possible to achieve a higher level of safety.

### REFERENCE SIGNS LIST

- 10:: X-ray inspection apparatus
- 12:: Conveyor (conveying unit)
- 13:: X-ray irradiator
- 14:: Line sensor (X-ray detector)
- 20:: Controller (first control unit)
- 21:: Processor
- 23:: ROM (memory)
- 25:: Auxiliary storage device (memory)
- 30:: Display (input unit)
- 132a:: X-ray tube
- 134:: Electric power controller (second control unit)
- 136:: Electronic circuit
- 136a:: Division circuit
- P:: Product (object being inspected)

### CITATION LIST

### PATENT LITERATURE

[Patent Literature 1] Japanese Laid-open Patent Publication No. 2007-232586

## Claims

1. An X-ray inspection apparatus comprising:
a conveying unit configured to convey an object;
an X-ray irradiator configured to cause an X-ray tube to generate X-rays and irradiate the generated X-rays on the object that is being conveyed by the conveying unit;
an X-ray detector configured to detect the X-rays that have passed through the object;
a first control unit configured to inspect whether the object being inspected is defective based on a detection value detected by the X-ray detector and output, to the X-ray irradiator, a first voltage value and a first current value, which respectively are a value of a voltage and a value of a current which are to be inputted to the X-ray tube, so that the output of the X-ray tube is equal to or less than a first output; and
a second control unit configured to restrict the voltage or the current inputted to the X-ray tube independently of the first control unit, the second control unit being configured as a component separate from the first control unit,
the second control unit being configured to restrict, in a case where the output of the X-ray tube exceeds the first output when the voltage at the voltage value and the current at the current value outputted from the first control unit are inputted to the X-ray tube, the voltage or the current inputted to the X-ray tube so that the output of the X-ray tube is equal to or less than the first output.

2. The X-ray inspection apparatus according to claim 1, wherein:
the first control unit is a computer that has a processor and a memory, the processor being configured to execute a program stored in the memory and thereby output the first voltage value and the first current value to the X-ray irradiator, and
the second control unit has an electronic circuit configured to restrict voltage or current, the electronic circuit being configured to restrict the voltage or current inputted to the X-ray tube.

3. The X-ray inspection apparatus according to claim 1 or 2, wherein
the electronic circuit includes a division circuit configured to divide the first output by the first voltage value or the first current value.

4. The X-ray inspection apparatus according to claim 2 or 3, wherein
the electronic circuit is configured to restrict the current inputted to the X-ray tube to a second current value obtained by dividing the first output by the first voltage value in a case where the first current value is greater than the second current value.

5. The X-ray inspection apparatus according to claim 2 or 3, wherein
the electronic circuit is configured to restrict the voltage inputted to the X-ray tube to a second voltage value obtained by dividing the first output by the first current value in a case where the first voltage value is greater than the second voltage value.

6. The X-ray inspection apparatus according to any one of claims 1 to 5, further comprising
an input unit configured to receive input of the first voltage value,
the first control unit is configured to output the first voltage value received by the input unit to the X-ray irradiator.

7. The X-ray inspection apparatus according to claim 6, wherein
the input unit is configured to further receive input of the first current value with which a product of the first voltage value and the first current value is equal to or less than the first output, and
the first control unit is configured to output the first current value received by the input unit to the X-ray irradiator.

8. The X-ray inspection apparatus according to any one of claims 1 to 7, wherein
the first control unit is configured to acquire, from the X-ray irradiator, information pertaining to a maximum output of the X-ray tube that is set for the X-ray irradiator, and determine whether the maximum output of the X-ray tube and the first output stored in the memory match each other.
